# EUROPEAN PATENT APPLICATION

(11) **EP 1 865 410 A1**
(43) Date of publication of application: **12.12.2007**
(21) Application number: 06011899.9
(22) Date of filing: 09.06.2006
(51) Int. Cl.: G06F 9/44

(54) **Human-machine interface system with device bridge and method for designing and operating the same**

(71) Applicant: Delta Electronics, Inc., Taoyuan Hsien 333 (TW)
(72) Inventor: Sun, Yu-Feng, c/o Delta Electronics, Inc., Kuei San Industr. Zone Taoyuan Hsien 333 (TW)
(74) Representative: TER MEER - STEINMEISTER & PARTNER GbR

(57) **Abstract**

A human-machine interface system includes a master unit and a device bridge. The master unit includes a first processor and the device bridge includes a second processor, where the second processor is connected to the master unit through a bus and a device end through a device communication port. The device bridge has communication ability with the device end and processing ability. Therefore, the device bridge can report device status to the master unit. In design stage of the human-machine interface system, screen elements and device address transfer table are designed in parallel, and then the screen elements are merged with the device address transfer table. In operation stage of the human-machine interface system, the status of the device end can be written in internal memory of the device bridge. The master unit knows the status of the device end by reading the internal memory of the device bridge.

## Description

### BACKGROUND OF THE INVENTION

### 1. Field of the Invention

The present invention relates to a human-machine interface system and a method for designing and operating the same, especially to a human-machine interface system with device bridge and a method for designing and operating the same.

### 2. Description of Prior Art

Human-machine interface (HMI) refers to hardware and software used for communication between user and computer. The human-machine interface can provide interactive operations between user and computer to facilitate user's task. The Human-machine interface can include keyboard, mouse, digital pad for input, and display monitor and audio device for output.

The conventional HMI system generally integrates various hardware such as USB, RS-232, RS-422, RS-485, CAN BUS or Ether Net on an embedded hardware platform. The central processing unit (CPU) of the HMI system performs processing tasks such as screen manipulation, calculation, I/O control and communication control. As the demand for display quality is increased, a low price process is difficult to performs above processing tasks in real time.

Another important issue is the communication compatibility with other manufactures, the hardware and software architecture may be adapted under client's requests.

As the progress of semiconductor manufacture technology, the processors are developed to integrate interface controller circuits of peripheral devices to its architectures. A micro processor comprises a controller as a core and integrate other controllers such as memory controller, cache controller, timer controller, communication controller (such as SPI, USB and UART). That is so called SOC (System On Chip) micro processor architecture.

The nowadays HMI gradually adapts SOC-based design and uses SOC as core to replace conventional design, where single chip or micro processor are used with other peripheral controller chips. Therefore, the speed of system bus can be enhanced and the design complexity can be reduced. The number of peripheral controllers can also be reduced.

The commercially available low-price HMI hardware uses only one micro-processor to control the whole HMI system. The resource of the micro-processor is not enough for multi-task or single-task environment. The real time issue is important to industrial control and it is desirable for a low-cost and high-performance HMI products.

The conventional HMI product generally reduces cost at the expense of low display resolution. However, the trend for next HMI product is high definition LCD. The next-generation micro-processor might have built-in graphic accelerator. However, the micro-processor will not have enough efficiency to deal with real-time communication protocol processing. Therefore, the conventional HMI product generally uses external hardware protocol module.

Moreover, when the SOC has built-in communication controller, the software used by controller is not independent with the software of HMI. When device connected to the HMI is changed, the communication protocol of the HMI also needs changes. Moreover, in the software development, new communication protocol and new edition are necessary for different devices. It is cumbersome to HMI manufacturer and clients. The client cannot arbitrarily change different connected devices. New control screen and new communication protocol needs redesign when the connected device is changed.

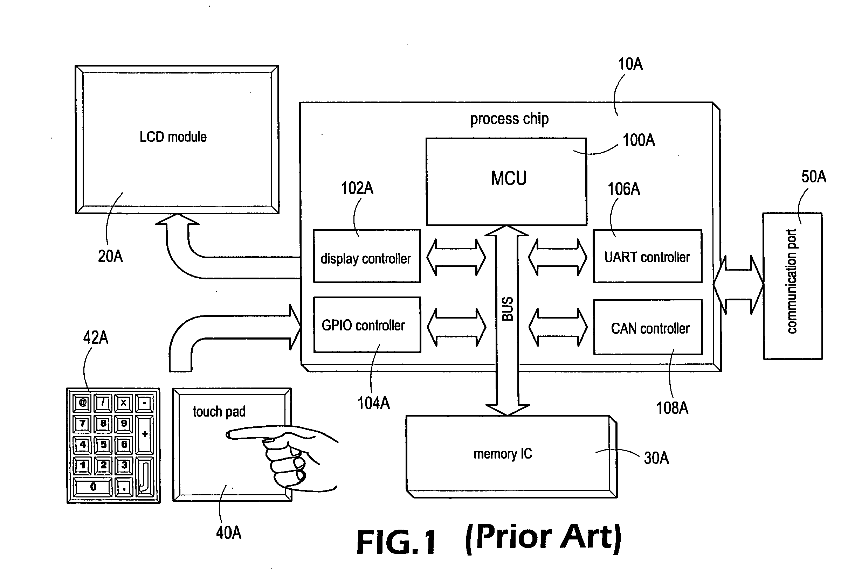

Fig. 1 shows a hardware architecture of conventional HMI system. The HMI system uses a micro controller unit (MCU) 100A to control all interfaces. The HMI system comprises a process chip 10A, an LCD module 20A, a memory IC 30A, a user input device (including touch pad 40A and numeric pad 42A), a communication port 50A. The processor chip 10A comprises the MCU 100A, a display controller 102A, a GPIO controller 104A, a UART (Universal Asynchronous Receiver/Transmitter) controller 106A and a CAN controller 108A. The memory IC 30A is memory block to store execution program and data such as Flash ROM, SDRAM and SRAM. The UART controller 106A provides communication circuit modules such as RS-232, RS-422 and RS-485.

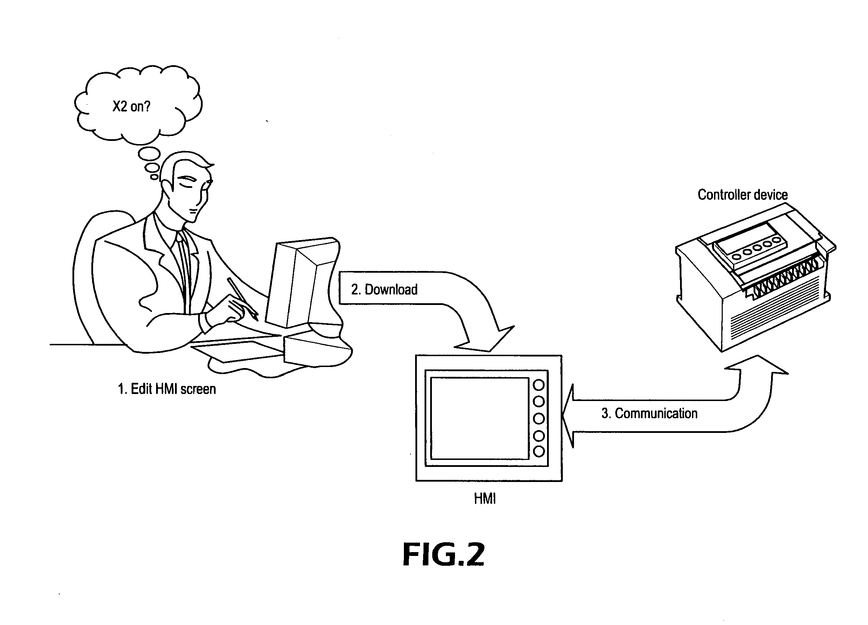

Fig. 2 shows the operation mode of conventional HMI software. In design of HMI screen, the designer needs to decide the device in the beginning, and the parameter will be designated to a device for an adding screen element. Therefore, designer needs to consider the screen element, destination device and communication protocol simultaneously when designing the mapping relationship of screen element and destination device. However, the destination device is directly mapped to screen element. There are lots of modification operations when the destination device is modified or added later.

Moreover, user needs to organize screen element by the device characteristics. Therefore, user is difficult to consider the applicability of the screen element when the destination device is changed in the future. The designer faces a problem of re-designing screen element when the destination device is changed.

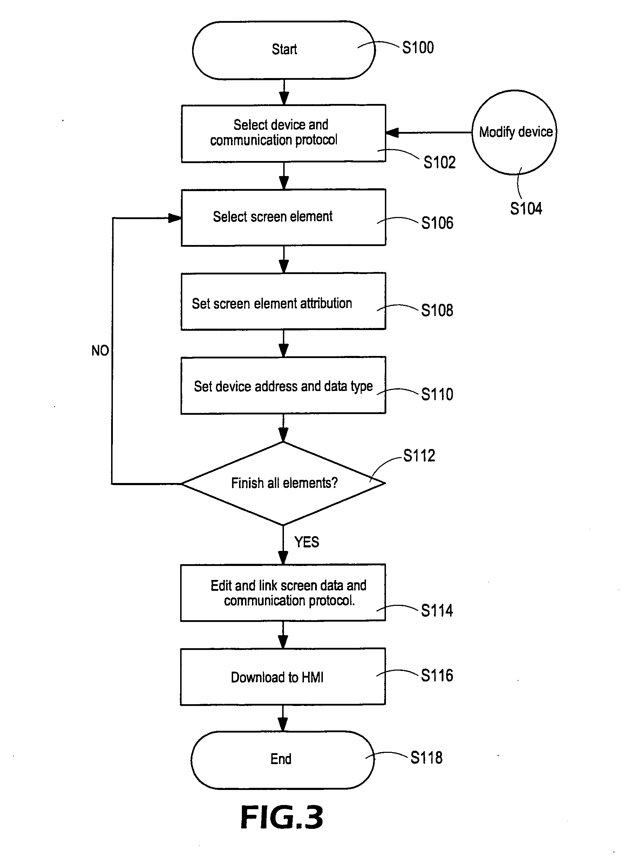

Fig. 3 shows an operation flowchart of a HMI software. In step S 100, the HMI designer designs HMII screens. The designers determines the communication protocol by considering the brand and feature of the connected controlled of the HMI in step S102. The screen element is selected according different controller in step S106. Each of the screen elements is set in step S108. The device address and data type are set in step S110. The brand and series model is changed during design in step S104, where the attribution of each screen element is updated for new controller. Step S 112 check whether all elements are checked. If the screen contains 1000 elements, the 1000 elements need update. Step S 114 performs edit and link of screen data and communication protocol. The screen data and communication protocol are downloaded to HMI in step S 116. This is a single line workflow and the design cannot be changed during process. The design should be restarted when the destination device (controller) is changed.

Therefore, the current HMI products have flexibility and modularization problem in hardware and software architecture. It is desirable to separate the HMI interface module and communication module into independent modules, which handle their own tasks independently.

### SUMMARY OF THE INVENTION

The present invention to provide a modularized method for designing the HMI interface system. The complicated and realtime-demanding communication tasks are performed by a communication module external to a main system for performing interface function. Therefore, the main system and the communication module can be updated individually.

Accordingly, the present invention provides a human-machine interface system with device bridge comprising a main system functioned as an interface module and a device bridge. The interface module comprises a first processor for processing signals. The interface module further comprises input unit such as keypad, mouse and touch pad. The interface module further comprises output unit such as LCD, CRT or printer. The further comprises an expanded bus for communicating with the device bridge. The device bridge comprises a second processor for processing protocol and signal conversion for devices. The device bridge comprises program memory and data memory accessed by the expanded bus of the interface module. Therefore, the device bridge can share data with the interface module through the data memory.

Accordingly, the present invention provides a method for operating the human-machine interface system with device bridge with following features.

In one aspect of the present invention, the interface module has independent operation and the status of the device can be obtained by reading a common memory such as a dual port memory of the device bridge. The interface module does not need specific communication protocol for the device to obtain the status of the device.

In another aspect of the present invention, the device bridge has its own processor and program and communicates with the device. The status of the device is recorded in an internal memory of the device bridge to provide cache memory function.

In still another aspect of the present invention, the device bridge can download a device address transfer table to update the brand and model information for the device, and the interface module has no need to modify.

In still another aspect of the present invention, the interface module can directly control the device bridge to stop or to operate. Namely, the interface module controls the whole HMI system.

In still another aspect of the present invention, the interface module can send data or file in the memory pro se or external memory card to the device bridge, thus facilitating the operation of the device bridge.

### BRIEF DESCRIPTION OF DRAWING

The features of the invention believed to be novel are set forth with particularity in the appended claims. The invention itself however may be best understood by reference to the following detailed description of the invention, which describes certain exemplary embodiments of the invention, taken in conjunction with the accompanying drawings in which:
Fig. 1 shows a hardware architecture of conventional HMI system.
Fig. 2 shows the operation mode of conventional HMI software.
Fig. 3 shows an operation flowchart of a HMI software. In step S 100, the HMI designer designs HMII screens.
Figs. 4A and 4B shows a hardware architecture of the HMI system according to the present invention.
Fig. 5 is a schematic diagram of design process for the human-machine interface system with device bridge according to the present invention.
Fig. 6 shows the flowchart of design process for the human-machine interface system with device bridge according to the present invention.
Figs. 7A to 7C shows the device address transfer table according to the present invention.
Fig. 8 shows the operation flowchart for the human-machine interface system with device bridge according to the present invention.

### DETAILED DESCRIPTION OF THE INVENTION

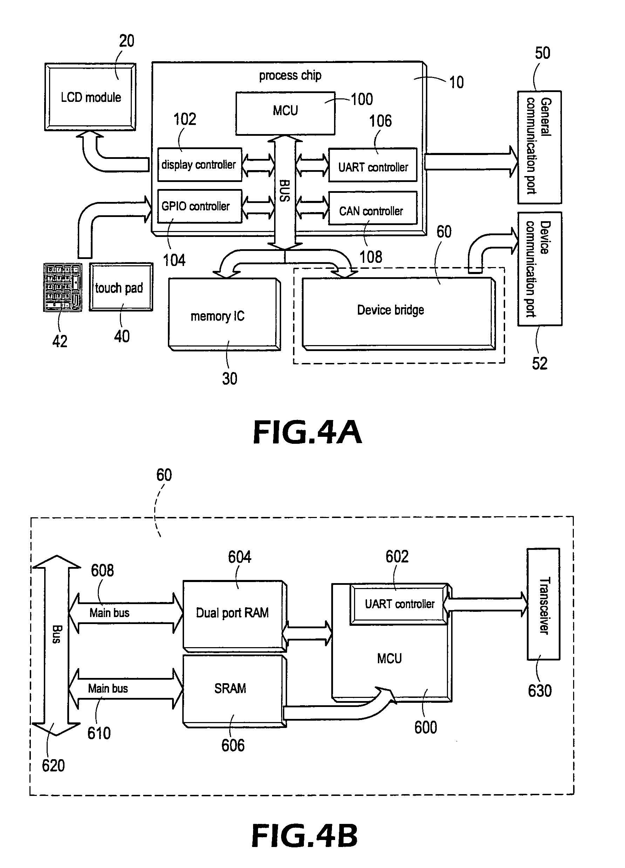

With reference to Figs. 4A and 4B, in the present invention, the HMI interface module (a main system) is separated with the communication module, where the separated communication module is referred to as device bridge 60. The device bridge 60 has an independent micro controller unit (MCU) for processing communication for device end, thus obtaining or setting status of device end. With reference to Figs. 4A and 4B, the device bridge 60 comprises a second micro controller unit (MCU) 600, a UARY controller (or a CAN controller) 602, a dual port RAM 604, an SRAM 606, main system memory 608, 610, a transceiver 630 and an internal bus 620. The HMI interface system with device bridge according to the present invention has following operations. At the beginning of the operation, program for the second MCU 600 and protocol translator are stored into the SRAM 606 through the internal bus 620. The device bridge 60 is informed to operate by the GPIO 104.

After the device bridge 60 finishes one communication cycle by itself, the device bridge 60 records the status of the device end into the dual port RAM 604 (or another ordinary memory) in the device bridge 60. The device bridge 60 informs the status of the device end to the main system through some mechanism such as interrupt. At any time point, the MCU 100 in the main system 10 can write the status of device end into the dual port RAM 604 and the status of device end is sent to the device end through the communication processing of the device bridge 60. Therefore, the communication task for the device end can be processed by the device bridge 60 instead of MCU 100 of the main system.

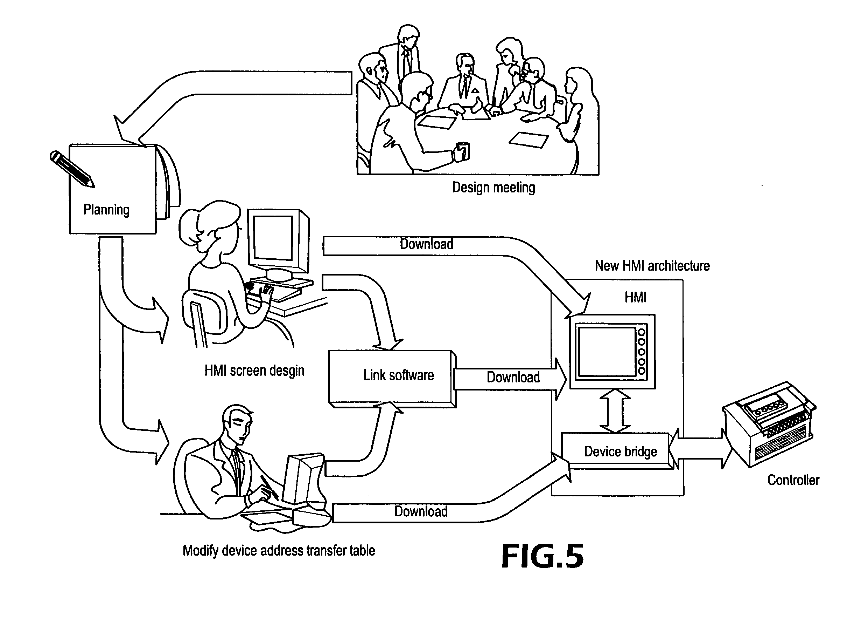

Fig. 5 is a schematic diagram of design process for the human-machine interface system with device bridge according to the present invention, where a parallel approach replaces a single path approach. There is no direct relationship in the design process for the screen element and the destination device according to the design method of the present invention. A screen element designer can program all the screen elements according to screen-element control serial number provided by a system analyzer. Afterward, a screen file is generated by screen edit software.

Another device end designer combines the communication protocol of destination device and mapping address for the device to generate an execution program code and a device address transfer table for the device bridge 60 by a linking software. The screen file, the execution program code and the device address transfer table are downloaded to the HMI interface module (the main system) and then the HMI interface module sends the screen file, the execution program code and the device address transfer table to the device bridge 60. Alternatively, as shown in this figure, the screen file, the execution program code and the device address transfer table can be separately sent to the HMI interface module and the device bridge 60.

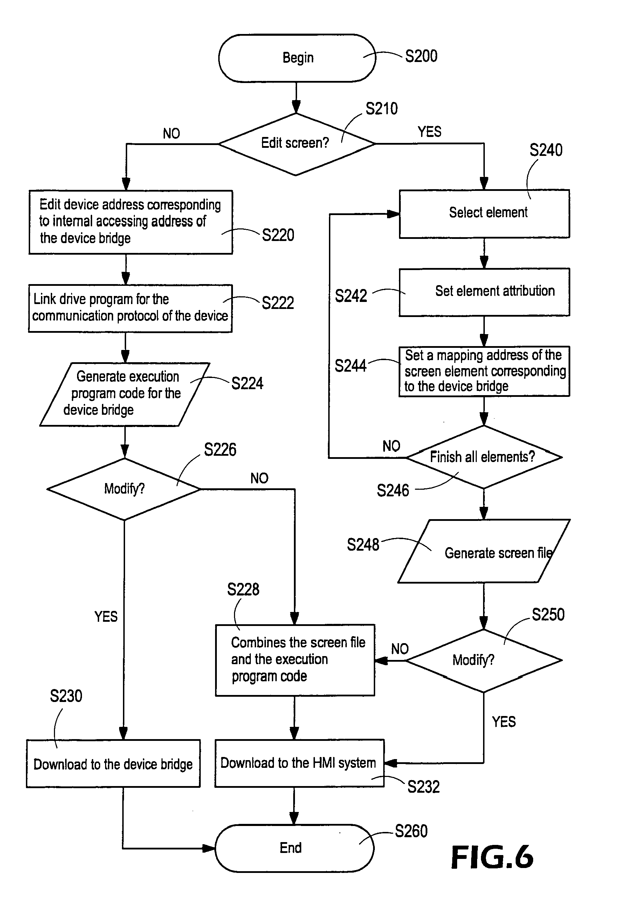

Fig. 6 shows the flowchart of design process for the human-machine interface system with device bridge according to the present invention. After begin step (S200), step S210 judges whether screen need edit. If true, step S240 selects screen element and step S242 sets element attribution. Step S244 sets a mapping address of the screen element corresponding to the device bridge 60. Step S246 judges whether all elements are finished. If false, the procedure is back to step S240, else a screen file is generated at step S248 and then step S250 judges whether modification is needed.

The following steps are performed when the screen is not edited in step S210. Step S220 edits device address corresponding to internal accessing address of the device bridge 60. Step S222 links drive program for the communication protocol of the device. Step S224 generates execution program code for the device bridge. Step S226 judges whether modification is needed. If true, step S230 downloads the execution program code for the device bridge to the device bridge 60. If false, step S228 combines the screen file and the execution program code for the device bridge and step S232 download the combined result to the HMI system.

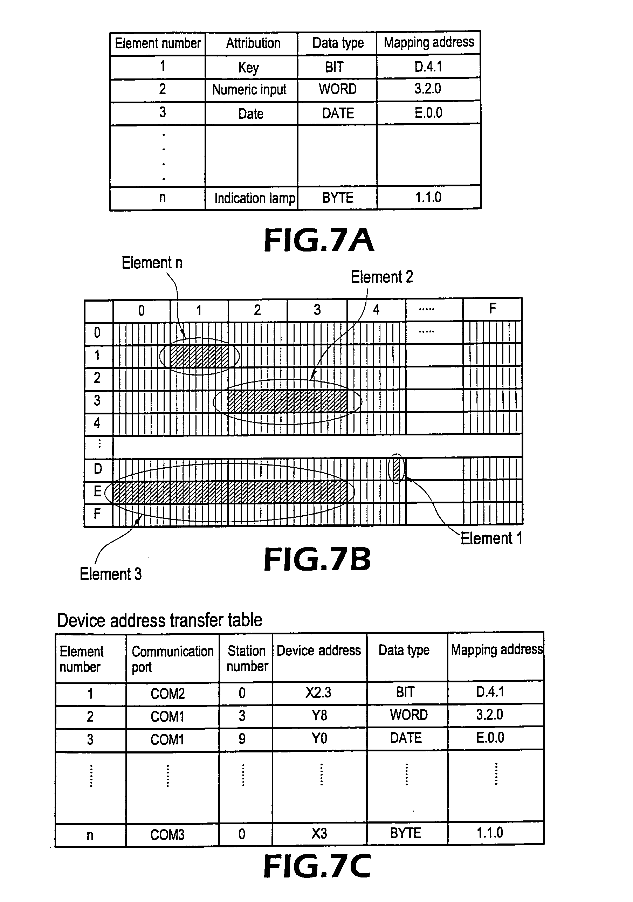

Figs. 7A to 7C shows the device address transfer table according to the present invention. The screen file records the attribution of each element, data type and direct accessing address of the element corresponding to the device bridge 60. The address in the screen file relates to accessing address of the element instead of address designated to any device. The device bridge 60 can find the accessing address in the internal memory of the device bridge 60 by the device address transfer table.

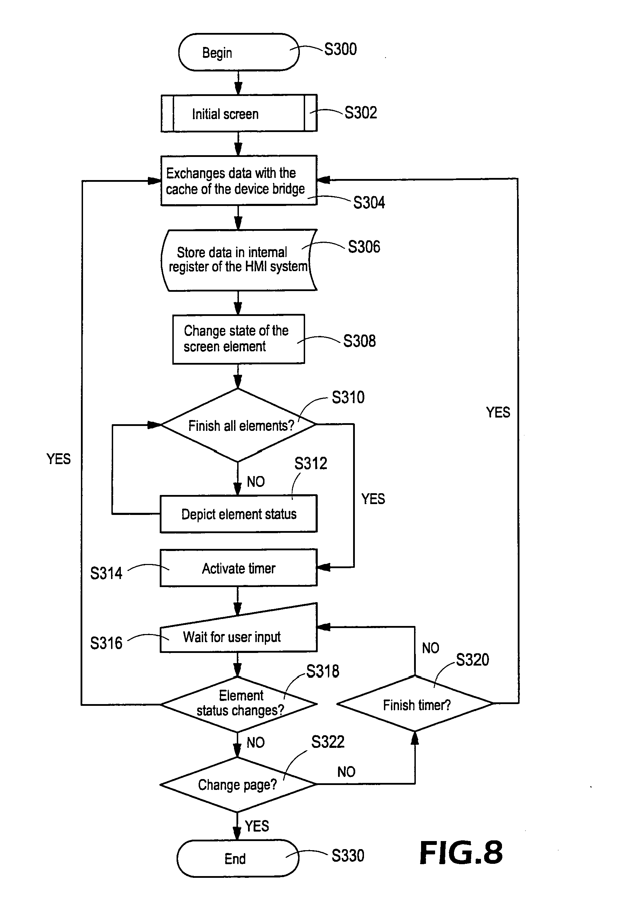

Fig. 8 shows the operation flowchart for the human-machine interface system with device bridge according to the present invention. After the new page begins (step S300), the initial screen is shown (step S302). The HMI exchanges data with the device bridge in step S304. The exchanged data is stored in the internal register of the HMI system in step S306. The state of the screen element is changed in step S308. Step S310 judges whether all screen elements are finished. If false, the element status is depicted in step S312, else a timer is activated in step S314. Step S316 waits the input from user. Step S318 judges whether the element status is changed. If true, the procedure is back to step S304, else step S322 judges whether the page should be changed. If false, the procedure is back to step S320. If true, the procedure is finished at step S330.

To sum up, the present invention has following advantages:
1. The HMI product according to the present invention has flexibility to meet the demand of time to market.
2. The performance for graphic processing and communication processing can both be enhanced for HMI.
3. The performance of system can be enhanced without using expensive processor.
4. The controller device is not taken into account when the graphic of the HMI is designed.
5. The screen design of HMI is performed parallel. The portability and reuse of the screen are enhanced.

## Claims

1. A human-machine interface system with device bridge, comprising
a main system comprising a first processor; and
a device bridge comprising a second processor and connected to the main system through at least one main bus, the device bridge being connected to a device through a device bus,
wherein the device bridge has processing and communication ability for the device, and reporting a status of the device to the main system.

2. The human-machine interface system with device bridge as in claim 1, wherein the device bridge comprises a UART controller.

3. The human-machine interface system with device bridge as in claim 1, wherein the device bridge comprises a CAN controller.

4. The human-machine interface system with device bridge as in claim 1, wherein the device bridge comprises a dual port RAM.

5. The human-machine interface system with device bridge as in claim 1, wherein the device bridge is connected to the device through a transceiver.

6. The human-machine interface system with device bridge as in claim 1, wherein the main system comprises a GPIO controller

7. The human-machine interface system with device bridge as in claim 1, further comprising an LCD module.

8. The human-machine interface system with device bridge as in claim 1, further comprising an input unit.

9. The human-machine interface system with device bridge as in claim 1, wherein the input unit is a touch pad.

10. The human-machine interface system with device bridge as in claim 1, wherein the input unit is a numeric keypad.

11. A method for designing a human-machine interface system with device bridge, the human-machine interface system comprising a main system with a first processor and a device bridge with a second processor and connected to the main system and a device end, the method comprising:
designing a screen element;
designing a device address transfer table; and
linking the screen element and the device address transfer table.

12. The method for designing a human-machine interface system with device bridge as in claim 11, wherein the screen element and the device address transfer table are linked by a linking software.

13. The method for designing a human-machine interface system with device bridge as in claim 11, wherein the step of linking the screen element and the device address transfer table further comprises:
editing a device address corresponding to an internal accessing address of device bridge;
obtaining drive program of device communication protocol; and
generating execution program code for the device bridge.

14. A method for operating a human-machine interface system with device bridge, the human-machine interface system comprising a main system with a first processor and a device bridge with a second processor and connected to the main system and a device, the method comprising:
the main system storing an execution program code ad a protocol translator to an internal memory of the device bridge;
the device bridge writing a status of device to the internal memory of the device bridge; and
the main system reading the status of device in the internal memory of the device bridge.

15. The method for operating a human-machine interface system as in claim 14, wherein the main system informs the device bridge to operate through a GPIO.

16. The method for operating a human-machine interface system as in claim 14, wherein the device bridge writes the status of device into the internal memory of the device bridge after one communication cycle.

17. The method for operating a human-machine interface system as in claim 16, wherein the device bridge informs the main system through interrupt.

18. The method for operating a human-machine interface system as in claim 16, wherein the internal memory is a dual port memory.
